# EUROPEAN PATENT APPLICATION

(11) **EP 2 983 397 A1**
(43) Date of publication of application: **10.02.2016**
(21) Application number: 14180073.0
(22) Date of filing: 06.08.2014
(51) Int. Cl.: H04W 24/10

(54) **Selection of UEs for signalling based MBMS MDT log retrieval**

(71) Applicant: ALCATEL LUCENT, 92100 Boulogne-Billancourt (FR)
(72) Inventor: Godin, Philippe, 91620 Nozay (FR); Palat, Sudeep, Swindon, WI SN5 7DJ (GB)
(74) Representative: Cabinet Camus Lebkiri

(57) **Abstract**

Communication system comprising an eNodeB (1) of a long term evolution network (LTE) network and a user equipment (UE) (3) for the network, the eNodeB comprising a memory (2) for an element of information of Multimedia Broadcast Multicast Services (MBMS) log Minimization of Drive Test (MDT) configuration information for the UE (3), the element having a first value for identifying a signaling based operational mode of MBMS log MDT for the UE and the element having a second value different from the first value for identifying a management based operational mode of MBMS log MDT for the UE.

## Description

The invention concerns Long Term Evolution networks (LTE).

The words or abbreviations used in the present disclosure are given in reference to the LTE releases for the LTE standard except when expressly otherwise stated.

In Long Term Evolution (LTE) networks, a new type of Minimization of Drive Test (MDT) has recently been agreed by 3GPP named as Multimedia Broadcast Multicast Services (MBMS) MDT. The MBMS MDT works in the logged variant of MDT.

The main operational mode agreed to operate MBMS MDT is "management based" which means coverage based.

In this mode a cluster of base stations named as evolved nodeBs (eNBs) covering an area where MBMS related measurements need to be collected for Quality of Service (QoS) investigation are configured by the Operation and Maintenance System (O&M) in order to configure User Equipments (UEs) served by these eNBs to perform the required measurements. These measurements help to investigate the MBMS QoS in the indicated area. The area is typically defined by one or multiple broadcasting single frequency network (mbsfn) area(s).

When configured, the UEs effectively trigger the measurements only if they start an MBMS service and only if that service matches the requested area. Because the eNBs cannot guess in advance which UEs will be concerned by such service start, they typically configure "blindly" a large population of UEs with the sole knowledge that they are MBMS capable. As a result, if one such service happens to start, too many logs will be made by UEs and when all these UEs will signal to the eNBs that they have a log to report, the eNBs typically pick up only a few of them. This is a new characteristics not present in the unicast MDT existing so far which is related to the fact that eNBs cannot predict in advance which MBMS UEs are suitable to log the targeted area.

Recently a second operational mode has been agreed for MBMS MDT which is the "Signalling based" or "Signaling based" mode in addition to the "Management based" operational mode described above.

In signaling based mode, the network wants to trigger the log of a particular UE which needs to be investigated because the user has complained. Therefore, when an eNB receives the request for such signaling based MBMS MDT associated to a particular UE, it configures that UE only. The signaling based logs for this particular UE is more relevant than the blind logging from a large number of UEs. Once a log available, that UE will signal that it has log to report. But nothing differentiates this signal from the signal to report a log corresponding to a management based trigger. Therefore it is uncertain that the eNB receiving the signal decides to not pick up this report, for the reasons explained above.

If this log is not retrieved, then the MBMS QoS issue that this UE suffers from cannot be investigated and solved.

There is in the art prior to the invention no solution to be certain to retrieve the signaling based log except if all logs available are being retrieved which would then include all "management based " logs and would therefore overload the radio interface.

To the end of the present disclosure, a "memory" is intended as a mean, in an LTE network or in a UE, or in a communication system including the LTE network and the UE in combination, to memorize, i.e. to be able to store and to deliver, information necessary for the network or for part of the network or for the UE. This memory can for instance take the form of a physical circuit or programs or data processing means in a particular place in the network, as for instance in an eNB for the UE or in the UE itself, but it is also intended from the present disclosure that such a memory can take the form of a distributed set of physical circuits or programs or data processing means disseminated in the network or communication system and realizing, in combination, the function of memorizing without a specific local place being dedicated to the memorizing function. As well, it is intended from the present disclosure that storing circuit, storing function, delivering circuit and delivering function used for memorizing can be localized in a same local place in the network or communication system or in different places in the network or communication system.

### In this context, the disclosure concerns:

A communication system comprising a long term evolution network (LTE) network and a user equipment (UE) for the network, the network comprising a memory for an element of information of Multimedia Broadcast Multicast Services (MBMS) log Minimization of Drive Test (MDT) configuration information for the UE, the element having a first value for identifying a signaling based operational mode of MBMS log MDT for the UE and the element having a second value different from the first value for identifying a management based operational mode of MBMS log MDT for the UE.

### The disclosure concerns also:

A communication system comprising an eNodeB (1) of a long term evolution network (LTE) network and a user equipment (UE) (3) for the network, the eNodeB comprising a memory (2) for an element of information of Multimedia Broadcast Multicast Services (MBMS) log Minimization of Drive Test (MDT) configuration information for the UE (3), the element having a first value for identifying a signaling based operational mode of MBMS log MDT for the UE and the element having a second value different from the first value for identifying a management based operational mode of MBMS log MDT for the UE.

### The disclosure concerns also:

A communication system comprising a long term evolution network (LTE) network and a user equipment (UE) for the network, the UE comprising a memory for an element of information of Multimedia Broadcast Multicast Services (MBMS) log Minimization of Drive Test (MDT) configuration information for the UE, the element having a first value for identifying a signaling based operational mode of MBMS log MDT for the UE and the element having a second value different from the first value for identifying a management based operational mode of MBMS log MDT for the UE.

### The disclosure concerns also:

A Method for certain retrieving of an MBMS MDT log message in a communication system comprising a target eNB of a long term evolution network (LTE) network and a user equipment (UE) for the network, the method comprising the following steps:
- indicating by the UE to the target eNB that a MBMS MDT log is available from the UE
- obtaining for the target eNB, an element of information having a first value identifying a signaling based operational mode of MBMS log MDT for the UE and having a second value different from the first value for identifying a management based operational mode of MBMS log MDT for the UE.
- retrieving by the target eNB the MBMS MDT log message from the UE if the element of information has the first value.

The disclosure also concerns variants of the above method in which:
- said element of information is obtained from a source eNB of said network during an X2 handover from the source eNB to said target eNB.
- said element of information is obtained from said UE.
- said element of information is obtained from said UE via Radio Resource Control (RRC) messages.
- said element of information is obtained by the UE when said UE receives a configuration information for the MBMS MDT log.

### The disclosure also concerns:

A use, in a communication system comprising a target eNB of a long term evolution network (LTE) network and a user equipment (UE) for the network, of an element of information having a first value identifying a signaling based operational mode of MBMS log MDT for the UE and having a second value different from the first value for identifying a management based operational mode of MBMS log MDT for the UE, for retrieving by the target eNB, an MBMS MDT log message from the UE, if the element of information has the first value.

The disclosure also concerns variants of the above use in which:
- said element of information is provided to said target eNB by a source eNB, during a X2 handover from the source eNB to the target eNB.
- said element of information is provided to said target eNB by an MME during an S1 handover from the MME to the target eNB.
- said element of information is provided to said target eNB by said UE, via Radio Resource Control (RRC) messages.

This disclosure will be better understood in relationship with the following list of figures where:
- Figure 1 represents a first embodiment in an LTE network in which an element of information about MBMS MDT configuration for a UE is obtained by an eNB from the UE itself, having memorized an element of information value corresponding to a signaling based operational mode for MBMS MDT configuration mode of the UE.
- Figure 2 represents a second embodiment in an LTE network in which an element of information about MBMS MDT configuration for a UE is obtained by a target eNB from a source eNB during X2 handover from the source eNB to the target eNB.
- Figure 3 represents a third embodiment for the present disclosure in an eNB of an LTE network.

The mechanism disclosed below is to allow identification of the signaling based eMBMS MDT log from blind management based eMBMS MDT logs.

Two solutions are at first, proposed as part of this disclosure: a UE-based solution and a network-based solution. A third solution is then also disclosed: an eNodeB-based solution.

A first embodiment or UE-based solution or solution 1 is as follows:

A new first element of information (IE1) is added to the information element (IE) or message by which the eNB configures the UE for MBMS MDT. This IE1 indicates to the UE the type of configuration ("signaling based" or "management based"). Later on, in the message or IE in which the UE indicates that it has a log for MBMS MDT available for retrieval, a new second element of information (IE2), which could be equal to IE1, is included to signal if this log is of type "signaling based " (i.e. had been configured for signaling based MBMS MDT) or of type "management based" (i.e. had been configured for management based MBMS MDT).

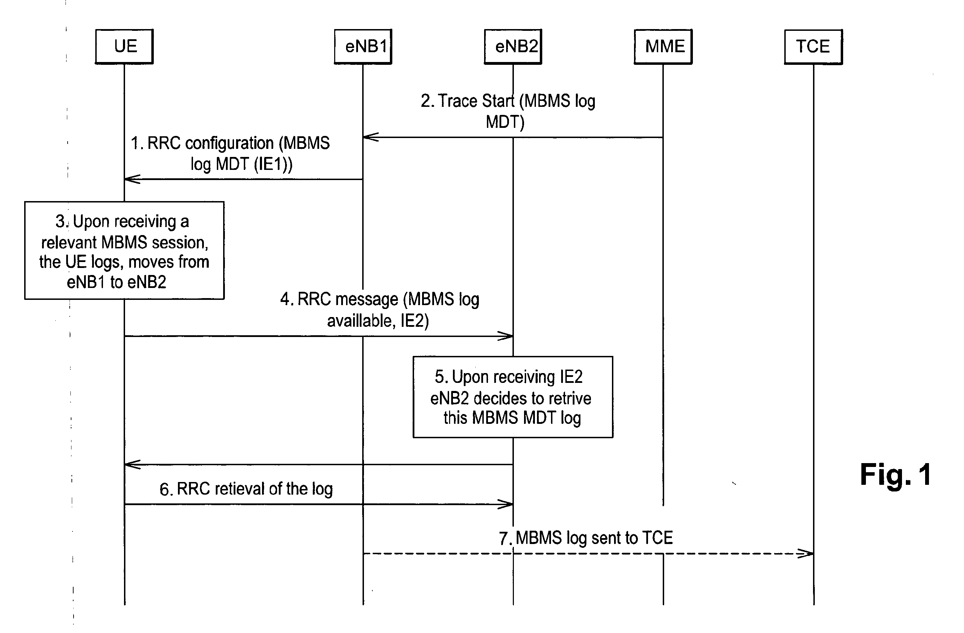

Because the UE can move between the time it is configured for MBMS MDT and the time when it has a log available to report, an embodiment of the present invention is shown in figure 1 where the eNB2 which receives the IE2 from the UE is different from the eNB1 which sets IE1.

A variant of this UE-based solution consists in UE transparently storing the log type (IE1) and inserting it transparently in the retrieval message.

Another variant could even consist of implicit signaling of the log type via the UE using existing MDT parameters which are already transparently relayed via the UE. In this variant when the eNB2 retrieves those parameters together with the log it can infer the log type used by eNB1 from the value set from those parameters. For example today the UE already relays transparently the parameters of Trace Reference, Trace Recording Session Reference or TCE-id i.e. eNB1 configures the UE with them and eNB2 will retrieve them together with the log. If the operator has configured e.g. specific ranges of any of those parameters for log type of "signaling" and other ranges for log type of "management based", then eNB2 will be informed of the log type used simply by looking at which range the retrieved value belongs to.

It can be noticed that for instance, negative values could be used to indicate the signaling based mode when the MDT parameters are necessarily positive while the management based mode could be indicated by the positive values of the parameters.

It can be noticed that any flag of one bit being sufficient to discriminate between the couple of operational modes existing for MBMS MDT configuration at the date of the present disclosure, it can be understood from the present disclosure, that any couple of two values of a field of more than one bit would be adapted to the embodiments of this disclosure.

It can be noticed that, if several new operational modes were to be defined in the future for MBMS MDT or eMBMS MDT, it can be understood from the present disclosure that any field of bits encompassing the number of operational modes in its range would be adapted to the embodiments of this disclosure.

It can be noticed that if management based MBMS log MDT was to be replaced in the future by a different mode, it can be understood from the present disclosure that this operational mode would be equivalent of Management Based MBMS log MDT to the end of the present disclosure.

It can be noticed that Management based MBMS log MDT can also be understood to the end of the present disclosure as the operational modes for MBMS log MDT which are not the signaling based operational mode for MBMS log MDT.

In reference to figure 1, the above first embodiment can be embodied in an LTE network by seven steps:
- In step 1 the MME requests the eNB1 to configure a particular UE for MBMS log MDT (therefore it is a signaling based MBMS MDT).
- In step 2 the eNB1 configures the UE for MBMS log MDT and includes a new IE1 to indicate that this configuration is associated with a "signaling based" request.
- In step 3 time runs during which the UE starts an mbms service corresponding to the request of the log, logs the data, moves.
- In step 4, UE signals to eNB2 that a log is available and includes the new IE2 which eNB 2 understands as that the log which is available for report has been obtained through a "signaling based" request.
- In step 5, upon receiving the IE2, eNB2 decides to retrieve the log from the UE.
- In step 6, the eNB2 retrieves the log from the UE
- In step 7, later on, the log is finally sent to the Trace Collection Entity (TCE) for further investigation.

A second embodiment or Network-based solution or solution 2 is as follows:
A less perfect but good enough solution does not involve the UE, hence is called here "network based". In that solution if eNB1 configures the UE due to a signaling based MBMS MDT request, it will propagate this information at each X2/S1 handover to another eNB (for S1 handover may be provided by the MME to the target eNB instead). Therefore when the UE signals to eNB2 that it has a log available at incoming handover time to eNB2, eNB2 can infer from the fact that the UE had been configured for signaling based MBMS MDT, that the log which is available is a signaling log type and that it should absolutely retrieve it. In that solution, if the UE goes via an idle period before the log is signaled to be available, the eNB2 (where the UE gets connected again after the idle period) will rely on the Mobility Management Entity (MME) providing again the log type indication i.e. if MME configures the eNB2 for signaling based MBMS MDT the eNB2 will infer from that that the log which the UE has available is certainly also of signaling type. This solution 2 is however not as good as solution 1 because if one eNB in a chain of X2 handovers doesn't support the feature the propagation of the log type could get lost.

A variant of that solution 2 is that the information is propagated at each X2/S1 handover to the target eNB not from the source eNB but directly from the MME.

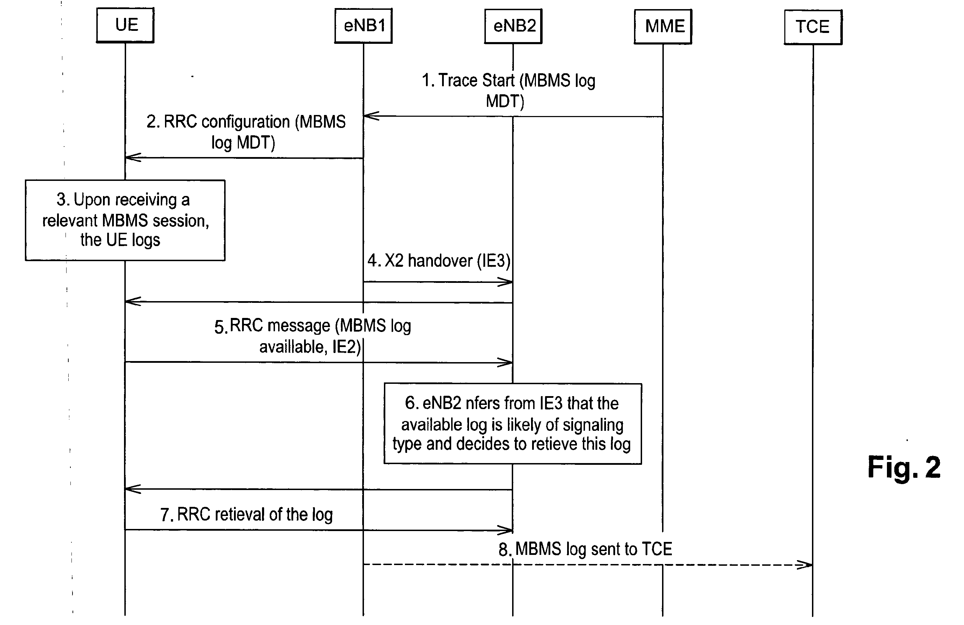

In reference to figure 2, the above first embodiment can be embodied in an LTE network by eight steps:
- In step 1 the MME requests the eNB1 to configure a particular UE for MBMS log MDT (therefore it is a signaling based MBMS MDT).
- In step 2 the eNB1 configures the UE for MBMS log MDT.
- In step 3 time runs during which the UE starts an mbms service corresponding to the request of the log and logs the data.
- In step 4 eNB1 makes X2 handover to eNB2 and includes a new IE3 to indicate that this UE had been configured for a signaling based MBMS MDT.
- In step 5 the UE signals to eNB2 that a log is available
- In step 6 the eNB2 infers from IE3 of step 4 that the log available for report at step 5 has likely been obtained through a "signaling based" request and decides to retrieve the log.
- In step 7 the eNB2 retrieves the log from the UE
- In step 8, later on, the log is finally sent to the TCE for further investigation.

A third embodiment or eNB-based solution or solution 3 is as follows:

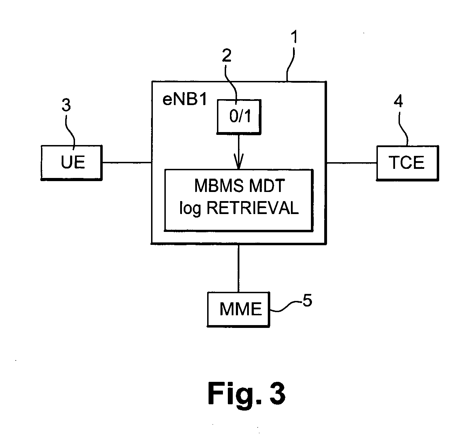

The figure 3 represents an eNB node (1) of an LTE network. The eNB (1) is connected to a UE (3), a TCE (4) and an MME (5). The eNB (1) comprises a memory (2) which can contains a 0 value for management mode of MBMS MDT log messages configuration for the UE (3) or 1 value for signaling mode of MBMS MDT log messages configuration for the UE (3).

The function of the memory (2) is to control MBMS MDT log retrieval for the UE(3).

When the memory (2) contains 0, the messages are treated according to MBMS MDT rules for management based operational mode and the transmission of the log messages for the UE is uncertain in the sense that the log may not be retrieved by the eNB.

When the memory (2) contains 1, the messages are treated according to MBMS MDT signaling mode rules and the transmission of the log messages for the UE is certain or deterministic, in the sense that it can be guaranteed that the log will be retrieved by the eNB and further transmitted to the TCE (4) by the eNB (1).

The invention is susceptible of industrial application in Long Term Evolution networks.

## Claims

1. Communication system comprising a long term evolution network (LTE) network and a user equipment (UE) for the network, the network comprising a memory for an element of information of Multimedia Broadcast Multicast Services (MBMS) log Minimization of Drive Test (MDT) configuration information for the UE, the element having a first value for identifying a signaling based operational mode of MBMS log MDT for the UE and the element having a second value different from the first value for identifying a management based operational mode of MBMS log MDT for the UE.

2. Communication system comprising an eNodeB (1) of a long term evolution network (LTE) network and a user equipment (UE) (3) for the network, the eNodeB comprising a memory (2) for an element of information of Multimedia Broadcast Multicast Services (MBMS) log Minimization of Drive Test (MDT) configuration information for the UE (3), the element having a first value for identifying a signaling based operational mode of MBMS log MDT for the UE and the element having a second value different from the first value for identifying a management based operational mode of MBMS log MDT for the UE.

3. Communication system comprising a long term evolution network (LTE) network and a user equipment (UE) for the network, the UE comprising a memory for an element of information of Multimedia Broadcast Multicast Services (MBMS) log Minimization of Drive Test (MDT) configuration information for the UE, the element having a first value for identifying a signaling based operational mode of MBMS log MDT for the UE and the element having a second value different from the first value for identifying a management based operational mode of MBMS log MDT for the UE.

4. Method for certain retrieving of an MBMS MDT log message in a communication system comprising a target eNB of a long term evolution network (LTE) network and a user equipment (UE) for the network, the method comprising the following steps:
- -indicating by the UE to the target eNB that a MBMS MDT log is available from the UE
- obtaining for the target eNB, an element of information having a first value identifying a signaling based operational mode of MBMS log MDT for the UE and having a second value different from the first value for identifying a management based operational mode of MBMS log MDT for the UE.
- retrieving by the target eNB the MBMS MDT log message from the UE if the element of information has the first value.

5. Method according to claim 4 in which said element of information is obtained from a source eNB of said network during an X2 handover from the source eNB to said target eNB.

6. Method according to claim 4 in which said element of information is obtained from said UE.

7. Method according to claim 6 in which said element of information is obtained from said UE via Radio Resource Control (RRC) messages.

8. Method according to any one of claims 6 to 7, where said element of information is obtained by the UE when said UE receives a configuration information for the MBMS MDT log.

9. Use, in a communication system comprising a target eNB of a long term evolution network (LTE) network and a user equipment (UE) for the network, of an element of information having a first value identifying a signaling based operational mode of MBMS log MDT for the UE and having a second value different from the first value for identifying a management based operational mode of MBMS log MDT for the UE, for retrieving by the target eNB, an MBMS MDT log message from the UE, if the element of information has the first value.

10. Use according to claim 9 in which said element of information is provided to said target eNB by a source eNB, during a X2 handover from the source eNB to the target eNB.

11. Use according to claim 9 in which said element of information is provided to said target eNB by an MME during an S1 handover from the MME to the target eNB.

12. Use according to claim 9 in which said element of information is provided to said target eNB by said UE, via Radio Resource Control (RRC) messages.
